# EUROPEAN PATENT SPECIFICATION

(11) **EP 3 277 562 B1**
(45) Date of publication and mention of the grant of the patent: **11.03.2020**
(21) Application number: 16771455.9
(22) Date of filing: 25.02.2016
(51) Int. Cl.: B62D 55/116, B60G 5/02, B60G 21/073, B62D 55/084, B62D 55/06, B62D 55/112, B60G 17/005

(54) **ARRANGEMENT FOR CONTROLLING DEFLECTION MOTIONS OF A CRAWLER TRACK DRIVEN UNDERCARRIAGE**
ANORDNUNG ZUR STEUERUNG VON ABLENKUNGSBEWEGUNGEN EINES DURCH KETTENLAUFWERK ANGETRIEBENEN UNTERWAGENS
AGENCEMENT POUR CONTRÔLER LES MOUVEMENTS DE DÉVIATION D'UN TRAIN DE ROULEMENT ENTRAÎNÉ À CHENILLES

(30) Priority: 01.04.2015 FI 20155230
(43) Date of publication of application: 07.02.2018
(73) Proprietor: PKP Flex Oy, 75710 Karhunpää (FI)
(72) Inventor: NEVALAINEN, Mika, 75710 Karhunpää (FI); HILJANEN, Jarno, 41120 Puuppola (FI); INGALSUO, Pekka, 40660 Jyväskylä (FI)
(74) Representative: Kangasmäki, Reijo Holger
(86) International application number: PCT/FI2016/050118
(87) International publication number: WO 2016/156660

(56) References cited:
- WO-A1-2008/077168
- WO-A1-2009/025831
- CN-A- 103 963 860
- JP-A- 2013 184 511
- US-A1- 2004 239 092
- US-B1- 6 199 646

## Description

The invention relates to an arrangement for controlling deflection motions of a crawler track driven undercarriage according to the preamble of the independent claim directed thereto.

The international publication WO 2008/077168 discloses an arrangement for controlling deflection motions of a crawler track driven undercarriage. The undercarriage, being meant for a working machine that is applicable especially for off-road use, comprises on sides thereof stiff crawler track bodies in longitudinal direction of the undercarriage, wherein ends of the crawler track bodies are provided with idle and sprocket wheels for crawler track use. The crawler track bodies are coupled with a center frame of the undercarriage turnably in a vertical plane along the longitudinal direction of the undercarriage by rotating joints between the center frame and the crawler track bodies.

Furthermore Finnish Patent No. 124715 discloses an undercarriage for a work machine suitable especially for off road use. In the undercarriage, on both sides there are at least three in longitudinal direction successive and in direction of height with respect to each other movable wheels, of which at least two have been coupled in a common rocker-bogie that turns in vertical plane. The undercarriage in question comprises a double jointed body structure, in which the rocker-bogies on both sides thereof are coupled together from a first joint point essentially in center part therein turnably to body parts that support the third wheels, which body parts for their part are coupled from a second joint point in a corresponding manner turnably in connection with the body structure of the undercarriage.

Thanks to the double jointed body structure of the above mentioned undercarriage, a sufficiently independent movement in direction of height in respect with each other of all the wheels of the undercarriage is made possible especially with a view to off road use. Thanks to the undercarriage in question and a low centre of gravity enabled by the same, deflection motions of a work machine coupled therewith has been tried to minimize by compensating its sideways deflections by using a hydraulic adjustment arrangement, with which wheels on the opposite sides of the undercarriage are coupled with each other in a way that a movement in direction of height of a wheel on the one side causes a movement of a corresponding magnitude in opposite direction of a corresponding wheel on the other side.

The technical implementation of the undercarriage mentioned above has been proven effective in practice, but for its part there has, however, been found a need in practice for improvement especially in the cost efficiency thereof, because the double jointed body structures utilized in the undercarriage in question are quite costly to implement due to their complexity. For the part of the undercarriage above, it has been found possible to implement the same in a more economical manner with crawler track driven arrangements, in which context there has been found a need for improvement especially in the controlling of the deflection motions of the undercarriage when utilizing in the undercarriage a crawler track drive without double jointed body structures.

It is an aim of the arrangement according to the invention at hand to bring about a decisive improvement in the problems described above and thus to raise essentially the level of prior art. In order to carry out this aim, the arrangement according to the invention is mainly characterized by what has been presented in the characterizing part of the independent claim directed thereto.

As the most important advantages of the arrangement meant for controlling deflection motions of a crawler track driven undercarriage according to the invention, may be mentioned simplicity and efficiency of constructions and use thereof thanks to the hydraulic cylinders utilized in the arrangement, being coupled directly between the coupling arrangement's coupling parts, wherein an optimal undercarriage with respect to its structure and functioning is enabled thanks to avoiding unnecessary joints in the power transmission and lever arms causing strains. Thanks to a restriction arrangement that restricts mutual rotating motion of the coupling parts of the coupling arrangement, being utilized as an advantageous embodiment in the arrangement according to the invention, it is furthermore possible in a very simple way to make more efficient the controlling of the vertical deflection motions of the undercarriage's crawler track bodies. As an advantageous embodiment of the invention, the restriction arrangement in question is possible to be executed at the simplest with mechanical limiters that are arranged with recess-projection arrangements between the coupling parts, at opposite outer ends thereof with respect to the coupling arrangement's end having the rotating joint, which stop the movements of the crawler track bodies mechanically in upper and lower positions of the undercarriage. Thus the undercarriage's hydraulic system and the hydraulic cylinders utilized therein cannot be overburdened thanks to the mechanical limiters. With the arrangement according to the invention, it is furthermore possible to compensate sideways deflections of the undercarriage by utilizing a hydraulically implemented adjustment arrangement in a way that pressure accumulators on the opposite sides of the undercarriage, being connected to separate hydraulic circuits, also for their part limit the movements of the crawler track bodies, which crawler track bodies are furthermore arranged to function with respect to each other in a way that the vertical movement of a crawler track body on the one side causes a movement of a corresponding magnitude in the opposite direction to the crawler track body on the other side.

Other advantageous embodiments of the arrangement according to the invention have been presented in the dependent claims directed thereto.

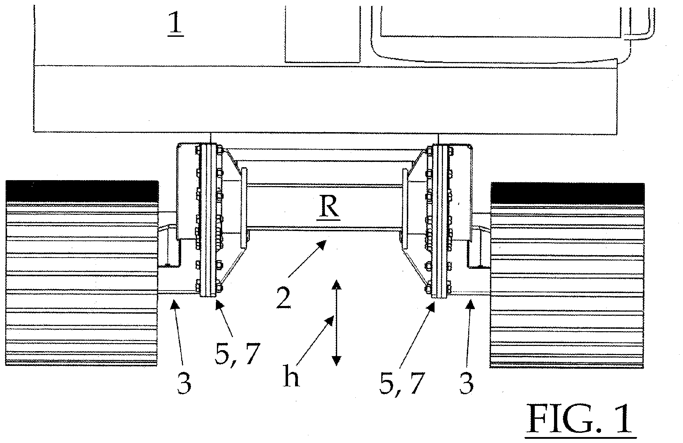

In the following description the invention is being illustrated in detail with reference to the appended drawings, in which
- in figure 1: is shown an advantageous crawler track driven undercarriage equipped with an arrangement according to the invention while coupled with a work machine when viewed from the front and back,

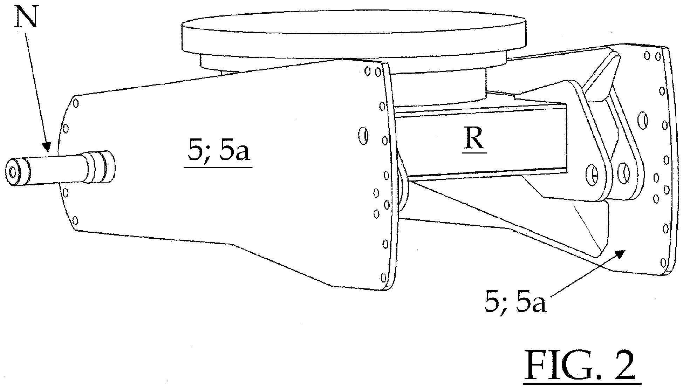

- in figure 2: is shown as a perspective view a center frame to be coupled by a rotating frame with a work machine, the center frame being equipped with first coupling parts of the coupling arrangement provided with the arrangement according to the invention,

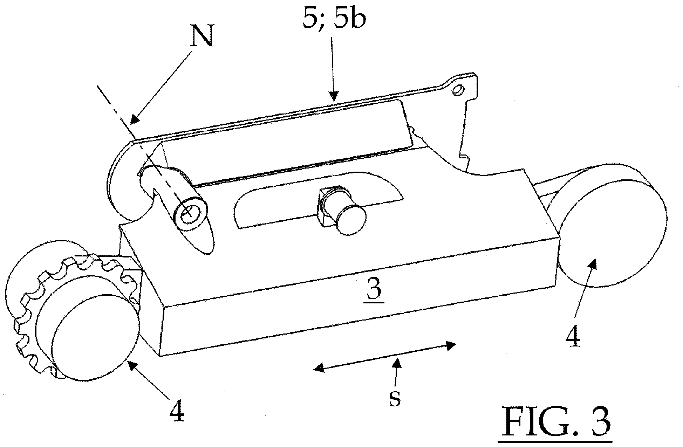

- in figure 3: is shown as a perspective view a crawler track body provided with a second coupling part of the coupling arrangement provided with the arrangement according to the invention,
- in figures 4a-4c: are shown functioning of a mechanical restriction arrangement being utilized as an advantageous embodiment of the arrangement according to the invention in extreme positions and a center position of the coupling parts,

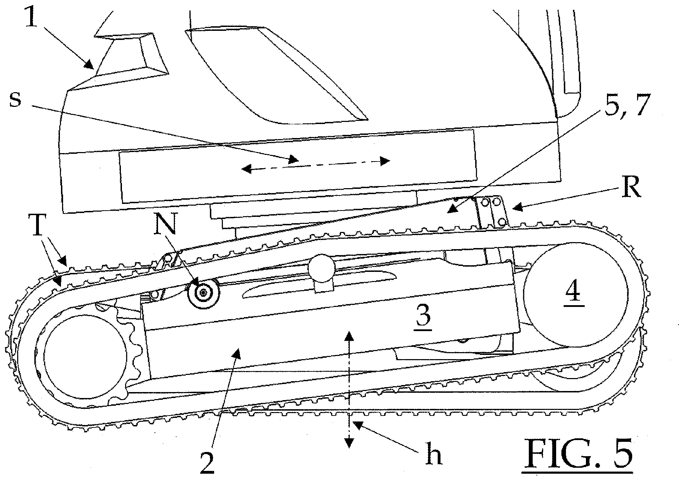

- in figure 5: is shown as a side view an undercarriage provided with the arrangement according to the invention in a deflected position of one of the crawler track bodies with respect to the basic position of the other crawler track body,
- in figures 6a and 6b: are shown alternative implementations for the part of placement of the hydraulic cylinders controlling the movement of the crawler track bodies,
- in figure 7: is shown a further advantageous implementation in practice of the arrangement according to the invention especially in order to improve stiffness of the undercarriage, and
- in figure 8: is shown as an exemplary process diagram a control principle related to use of drive motors of an advantageous undercarriage provided with the arrangement according to the invention.

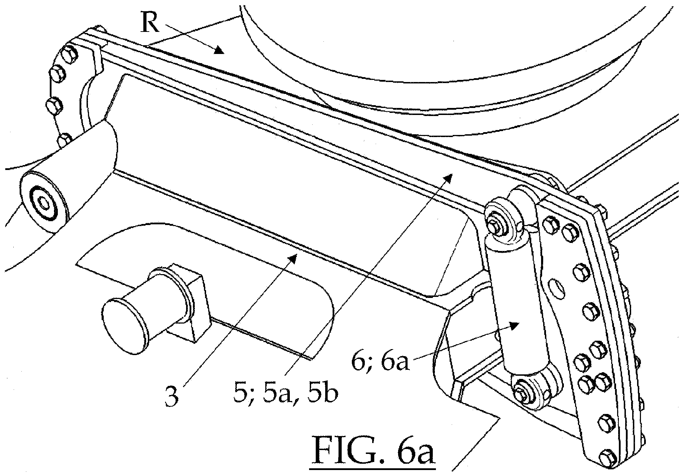

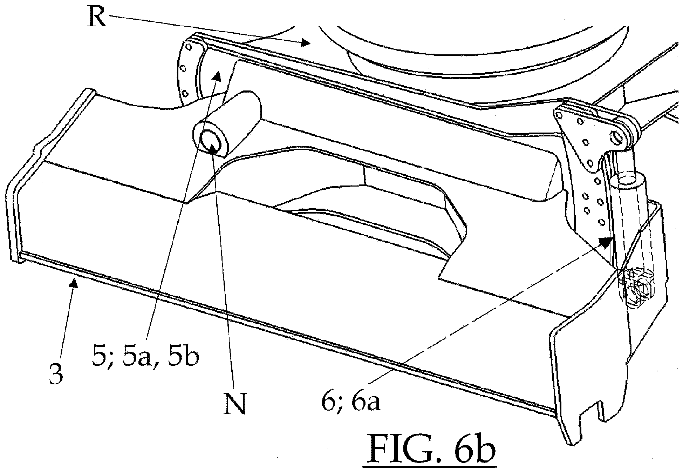

The invention relates to an arrangement for controlling deflection motions of a crawler track driven undercarriage, wherein an undercarriage 2, being meant for a working machine 1 that is applicable especially for off-road use, comprises on sides thereof stiff crawler track bodies 3 in longitudinal direction s of the undercarriage, wherein ends of the crawler track bodies are provided with idle wheels 4 for crawler track use T. The crawler track bodies 3 are coupled with a center frame R of the undercarriage turnably in a vertical plane along the longitudinal direction s of the undercarriage by rotating joints N between the center frame and the crawler track bodies, wherein at joint points connecting the center frame R of the undercarriage and the crawler track body 3 is arranged a coupling arrangement 5 for adjusting strain, which comprises first coupling parts 5a being fastened stationarily to the center frame R and second coupling parts 5b being fastened stationarily to the crawler track bodies 3. The coupling parts 5a, 5b comprise essentially elongated plates, which rotate against each other with respect to each other in an essentially vertical plane in order to enable a mutual rotating motion of the crawler track bodies 3 and the center frame R. The arrangement in the undercarriage comprises a pressure medium operated, in practice advantageously hydraulic, adjustment arrangement 6, whereby a movement in direction of height h of the crawler track body on the one side causes a movement of a corresponding magnitude in opposite direction of the crawler track body on the opposite side by using one or more hydraulic cylinders 6a that connect the crawler track bodies 3 and the center frame R at least in a power transmitting manner. The hydraulic cylinders 6a belonging to the arrangement that control rolling motion of the crawler track bodies 3 are coupled on opposite sides of the undercarriage on the principle manifesting itself e.g. in figures 6a and 6b by first ends thereof with the first coupling parts 5a and by second ends thereof with second coupling parts 5b.

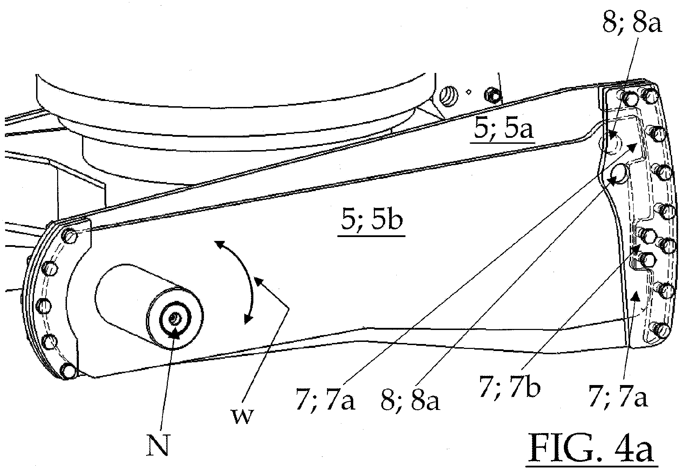

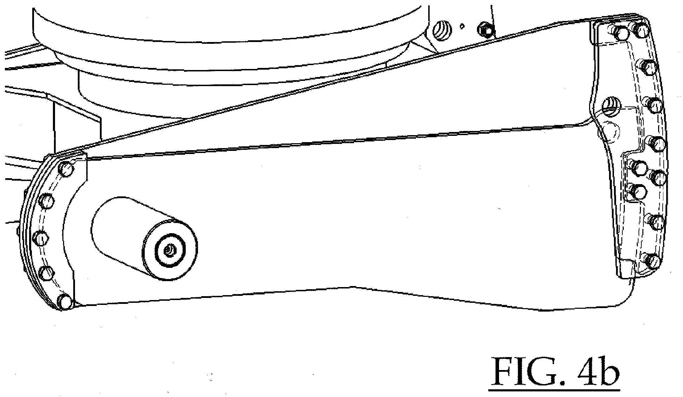

As an advantageous embodiment of the arrangement according to the invention, the arrangement additionally comprises furthermore at least a restriction arrangement 7 that restricts mutual rotating motion w of the coupling parts 5a, 5b of the coupling arrangement 5 in order to control the rolling motion in vertical plane of the crawler track bodies 3, which comprises especially with reference to the advantageous embodiment shown in figures 4a-4c mechanical limiters being arranged in connection with the coupling parts 5a, 5b, which limiters are arranged as a further advantageous embodiment with recess-protrusion arrangements 7a, 7b between the coupling parts 5a, 5b at outer ends thereof opposite to the end of the coupling arrangement 5 having the rotating joint N, which make possible mutual extreme positions according to figures 4a and 4b of the coupling parts.

The coupling arrangement 5 transmits all the sideways forces directed from the crawler track bodies 3 to the center frame R. Due to this, the coupling parts 5a, 5b are coupled with each other by opposite ends thereof with respect to the joint point N e.g. with a fork coupling that binds them with each other in crosswise direction, but enables their mutual rotating movement. The surfaces gliding against each other in the coupling arrangement are greased with fat, in addition to which they have most advantageously been manufactured from steel with exceptionally good wearing qualities (such as e.g. Hardox-plate or the like).

Thanks to the coupling arrangement, the sideways forces are not directed straight to the rotating joint N in the center frame R, but get transmitted through the coupling parts 5a, 5b. This type of an implementation is important due to the fact that especially in a glide steered undercarriage, the sideways forces are exceptionally high. The strain is the greatest when the tracks T are rotated in opposite directions and the machine so to say spins in place. Thus e.g. on an uneven ground, the side of the track may hit an obstacle in the middle of the spinning movement, which furthermore makes the situation worse.

The drive needed for moving and steering of a work machine 1 provided with the undercarriage is most advantageously carried out by using the idle wheels 4 on both sides, which rotate the tracks T going over the same. The way of steering of the undercarriage according to the invention is in such a case so called glide steering, wherein turning is executed by deflecting mutual rotating speeds of the right and left sided idle wheels 4.

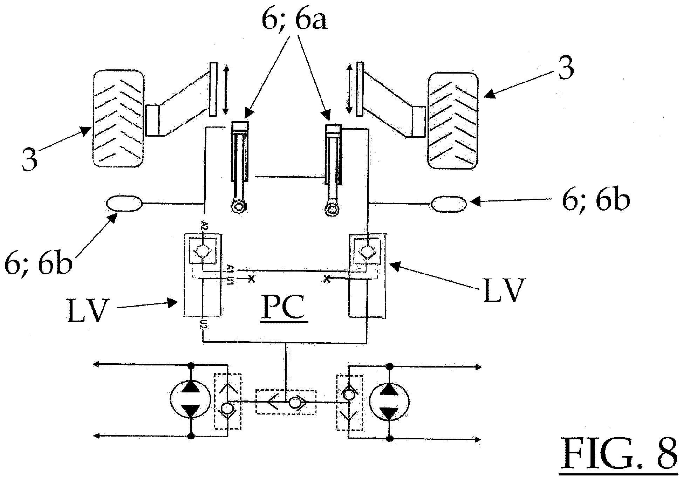

With reference to the exemplary process diagram shown in figure 8, in case there is no pressure in the preadjustment circuit PC of the lock valves LV, the springs thereof keep the said valves closed and a flow of oil from one hydraulic cylinder 6a coupling the crawler track body with the center frame R to the other is prevented. In this case, the hydraulic cylinders are thus not able to move. In case there is pressure in the preadjustment circuit, it forces the lock valves LV into open-position, wherein oil is allowed to flow between the hydraulic cylinders 6a. In this case, a movement upwards in the direction of height of the left crawler track body 3 upwards causes a movement of a corresponding magnitude in the opposite direction of the right sided crawler track body 3 and vice versa.

The adjustment arrangement 6 is arranged furthermore advantageously to operate in a manner coupled with the drive power transmission in a way that a stiffening function gets activated automatically as a drive movement stops. Thus the crawler track bodies of the undercarriage are being stiffened automatically into a position thereof at the moment as the drive movement stops, thanks to which the undercarriage, which, while moving as such gets "adapted" to the ground in a self sufficient manner, gets stiffened for the time while working in place, but is, however adapted to the ground thus enabling stable working with the work machine attached thereto. Naturally the controlling of the above mentioned stiffening function may instead of or in addition to what has been explained above also be manual.

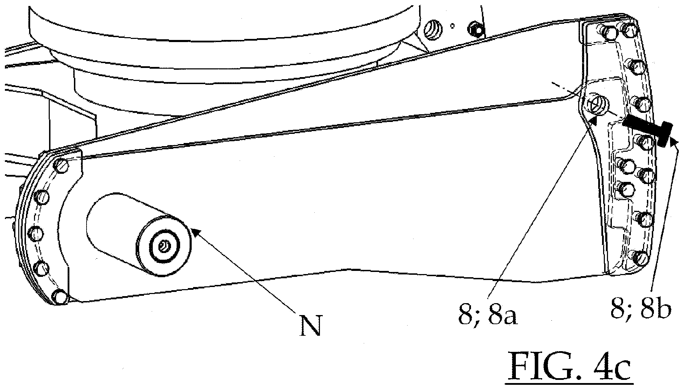

As a furthermore advantageous embodiment of the arrangement according to the invention, a locking arrangement 8 is arranged in connection with the coupling arrangement 5 for locking the coupling parts 5a, 5b immovable with respect to each other in a center position of the coupling parts as shown in figure 4c by mechanical, electric and/or pressure medium operated actuators.

As a furthermore advantageous embodiment of the arrangement according to the invention especially with reference to what has been shown in figures 4a-4c, the locking arrangement 8 is arranged at its simplest as shown in figure 4c mechanically by a locking socket 8b to be coupled with holes 8a in the coupling parts 5a, 5b.

As a furthermore advantageous embodiment of the arrangement according to the invention especially with reference to the exemplary hydraulic diagram shown in figure 8, in order to balance the adjustment arrangement 6 controlling deflection motions of the crawler track bodies 3 on opposite sides, it comprises separate pressure accumulators 6b in hydraulic circuits of the opposite crawler track bodies.

In this context, as a furthermore advantageous embodiment, volume of the pressure accumulators 6b of the crawler track bodies 3 to be operated by separate hydraulic circuits, is measured in a way that the accumulators cover the whole oil volume of the hydraulic cylinders 6a, wherein, when a precharge pressure of the pressure accumulators is exceeded while the undercarriage is under load, oil flows into the pressure accumulators 6b, wherein the hydraulic cylinders 6a get shorter, until the mechanical limiters 7; 7a, 7b stop the deflection motion of the undercarriage.

Thus, the pressure of the hydraulic system cannot be higher than the precharge pressure of the pressure accumulators. With the precharge pressure of the pressure accumulators, it is also when needed possible to adjust the stiffness and load capacity of the undercarriage. In addition, the crawler track bodies may, if needed, be locked in their center position e.g. on remote control principle from the cabin with pressure medium and/or electrically operated actuators.

Other in practise advantageous functions e.g. based on the diagram shown in figure 8 of the undercarriage equipped with the arrangement according to the invention are explained in more detail in the above mentioned Finnish Patent 124715.

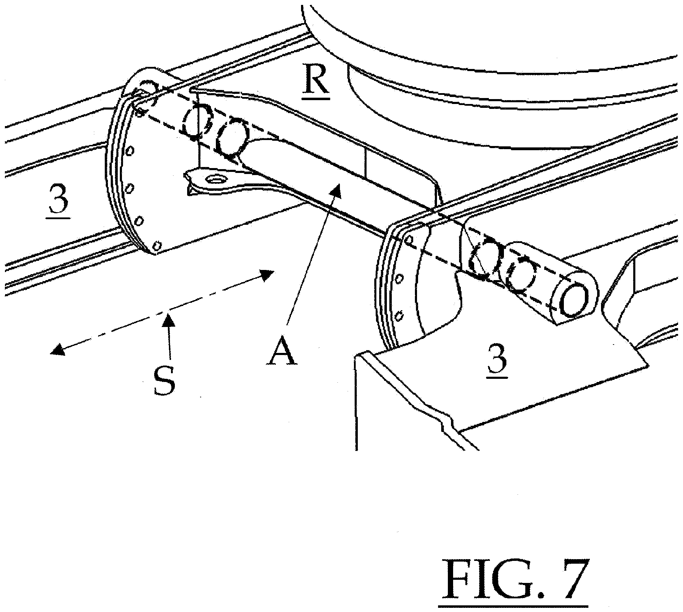

As a furthermore advantageous embodiment of the arrangement according to the invention, in order to optimize functioning thereof, the rotating joints N between the crawler track bodies 3 and the center frame R are arranged in order to stiffen the undercarriage, especially with reference to figure 7, advantageously by a joint axle A that connects the center frame R and crawler track bodies 3 with each other and that goes in transverse direction uninterruptedly through the undercarriage.

As a furthermore advantageous embodiment of the arrangement according to the invention, the hydraulic cylinders 6a controlling the rolling motion of the crawler track bodies 3 are placed with reference to figure 6a in a vertical position at the side of the coupling arrangement 5 on the side of the crawler track bodies 3.

In this context, with reference to figure 6b, the hydraulic cylinders 6a controlling the rolling motion of the crawler track bodies 3 are arranged as an alternative solution in a vertical position at an opposite end of the coupling arrangement 5 with respect to the rotating joint N.

With the above mentioned placements, the hydraulic cylinders may be placed as well protected as possible in connection with the crawler track bodies.

An undercarriage equipped with the arrangement according to the invention may also be implemented by modifying an existing work machine, such as e.g. an excavator, e.g. by cutting its lower carriage from both sides, after which the crawler track bodies being cut from the original lower carriage are being recoupled by means of the coupling arrangement with the lower carriage to be completed according to the invention, in which context it is also possible to increase ground clearance of the excavator. In this case, the separated lower carriage is first coupled with a coupling part that is secured in place advantageously with box-like support structures to minimize mass. After this it is in the same context furthermore being coupled with the rotating joint, with which the crawler track bodies may be mounted by bearings.

For the part of the crawler track bodies being separated from the original lower carriage, coupling parts are being fastened thereto that are being supported furthermore advantageously with box-like support structures to minimize mass. After this, bearing housings are being fastened to the crawler track bodies, through which the crawler track bodies are being mounted by bearings to the lower carriage that has thus been modified in the way described above as a center frame according to the invention, wherein thanks to the bearings rolling in vertical plane of the crawler track bodies is enabled. Thanks to the coupling parts of the coupling arrangement being fastened to the crawler track bodies and being able to glide with respect to each other by rotating in vertical plane, the coupling arrangement gives support against sideways strains and the bearings against strains both in vertical direction and in a direction parallel to the crawler tracks.

The rolling of the crawler track bodies can be locked by means of the hydraulic cylinders, wherein upper ends thereof get coupled through a pin or a lug to the coupling parts on the side of the undercarriage and, wherein lower ends thereof get coupled through a pin or a fork to the coupling parts on the side of the crawler track bodies, thanks to which the hydraulic cylinders may be placed according to space requirements of the surroundings at the side or at the end of the coupling arrangement. It is clear that the invention is not limited to the embodiments shown or described above, but it can be modified in various ways within the limits of the claims. Thus, it is first of all clear that the actuators belonging to the undercarriage may be executed partly with manual, electric and/or pneumatic actuators instead of or in addition to hydraulic implementations. Additionally, the drive of the undercarriage may also be executed partly or completely with combustion engine operated arrangements.

## Claims

1. Arrangement for controlling deflection motions of a crawler track driven undercarriage, wherein an undercarriage (2), being meant for a working machine (1) that is applicable especially for off-road use, comprises on sides thereof stiff crawler track bodies (3) in longitudinal direction (s) of the undercarriage, wherein ends of the crawler track bodies are provided with idle and sprocket wheels (4) for crawler track use (T), wherein the crawler track bodies (3) are coupled with a center frame (R) of the undercarriage turnably in a vertical plane along the longitudinal direction (s) of the undercarriage by rotating joints (N) between the center frame and the crawler track bodies, **characterized in that**, at joint points connecting the center frame (R) of the undercarriage and the crawler track bodies (3) is arranged a coupling arrangement (5) for adjusting strain, which comprises first coupling parts (5a) being fastened stationarily to the center frame (R) and second coupling parts (5b) being fastened stationarily to the crawler track bodies (3), the coupling parts (5a, 5b) comprising essentially elongated plates, which rotate against each other with respect to each other in an essentially vertical plane in order to enable a mutual rotating motion of the crawler track bodies (3) and the center frame (R), wherein the arrangement in the undercarriage comprises a pressure medium operated, preferably hydraulic, adjustment arrangement (6), whereby a movement in direction of height (h) of the crawler track body on the one side causes a movement of a corresponding magnitude in opposite direction of the crawler track body on the opposite side by using two pressure medium operated organs, preferably hydraulic cylinders (6a), being in communication with each other and connected between the crawler track bodies (3) and the center frame (R), wherein the hydraulic cylinders (6a) that control rolling motion of the crawler track bodies (3) are coupled on opposite sides of the undercarriage by first ends thereof with the first coupling parts (5a) of the coupling arrangement (5) and by second ends thereof with second coupling parts (5b) of the coupling arrangement (5), and wherein the coupling arrangement (5) comprises a restriction arrangement (7) that restricts mutual rotating motion (w) of the coupling parts (5a, 5b) in order to control the rolling motion in vertical plane of the crawler track bodies (3) by mechanical limiters being arranged in connection with the coupling parts (5a, 5b), the limiters being arranged with recess-protrusion arrangements (7a, 7b) between the coupling parts (5a, 5b) at outer ends thereof opposite to the end of the coupling arrangement (5) having the rotating joint (N).

2. Arrangement according to claim 1, **characterized in that**, a locking arrangement (8) is arranged in connection with the coupling arrangement for locking the coupling parts (5a, 5b) immovable with respect to each other by mechanical, electric and/or pressure medium operated actuators.

3. Arrangement according to claim 1, **characterized in that**, the locking arrangement (8) is arranged mechanically by a locking socket (8b) to be coupled with holes (8a) in the coupling parts (5a, 5b).

4. Arrangement according to any of the preceding claims 1-3, **characterized in that**, in order to balance the adjustment arrangement (6) controlling deflection motions of the crawler track bodies (3) on opposite sides, it comprises separate pressure accumulators (6b) in hydraulic circuits of the opposite crawler track bodies .

5. Arrangement according to claim 1 and 4, **characterized in that**, volume of the pressure accumulators (6b) of the crawler track bodies (3) to be operated by separate hydraulic circuits is measured in a way that the accumulators cover the whole pressure medium volume of the hydraulic cylinders (6a), wherein, when a precharge pressure of the pressure accumulators is exceeded while the undercarriage is under load, the pressure medium flows into the pressure accumulators (6b), wherein the hydraulic cylinders (6a) get shorter, until the mechanical limiters (7; 7a, 7b) stop the deflection motion of the undercarriage.

6. Arrangement according to any of the preceding claims 1-5, **characterized in that**, in order to optimize functioning thereof, the rotating joints (N) between the crawler track bodies (3) and the center frame (R) are arranged in order to stiffen the undercarriage with a joint axle (A) that connects the center frame (R) and crawler track bodies (3) with each other and that goes in transverse direction uninterruptedly through the undercarriage.

7. Arrangement according to any of the preceding claims 1-6, **characterized in that**, the hydraulic cylinders (6a) controlling the rolling motion of the crawler track bodies (3) are placed in a vertical position at the side of the coupling arrangement (5) on the side of the crawler track bodies (3).

8. Arrangement according to any of the preceding claims 1-7, **characterized in that**, the hydraulic cylinders (6a) controlling the rolling motion of the crawler track bodies (3) are arranged in a vertical position at an opposite end of the coupling arrangement (5) with respect to the rotating joint (N).

## Patentansprüche

1. Anordnung zur Steuerung von Ablenkungsbewegungen eines durch Kettenlaufwerk angetriebenen Unterwagens, in der ein Unterwagen (2) für eine geländegängige Arbeitsmaschine (1) seitlich steife Kettenlaufwerkkörper (3) in Unterwagenlängsrichtung (s) umfasst, deren Enden mit Lauf- und Kettenrädern (4) für den Kettenlaufwerkbetrieb (T) versehen sind, wobei die Kettenlaufwerkkörper (3) durch Drehgelenke (N) mit einem Mittelrahmen (R) des Unterwagens in vertikaler Ebene zur Unterwagenlängsrichtung drehbar verbunden sind, **dadurch gekennzeichnet, dass** an den Gelenkpunkten, die den Mittelrahmen (R) des Unterwagens mit den Kettenlaufwerkkörpern (3) verbinden, eine Kupplungseinrichtung (5) zum Ausgleich der Beanspruchung angeordnet ist, die erste Kupplungselemente (5a), die fest am Mittelrahmen (R) befestigt sind, und zweite Kupplungselemente (5b), die fest an den Kettenlaufwerkkörpern (3) befestigt sind, umfasst, wobei die Kupplungselemente (5a, 5b) im Wesentlichen aus länglichen Platten bestehen, die sich gegeneinander in einer im Wesentlichen vertikalen Ebene drehen, um eine gegenseitige Drehbewegung der Kettenlaufwerkkörper (3) und des Mittelrahmens (R) zu ermöglichen, wobei die Anordnung im Unterwagen eine druckmittelbetriebene, vorzugsweise hydraulische Einstellanordnung (6) umfasst, bei der eine Bewegung in Höhenrichtung (h) des Kettenlaufwerkkörpers auf der einen Seite eine entsprechend große Bewegung in Gegenrichtung des Kettenlaufwerkkörpers auf der gegenüberliegenden Seite unter Verwendung zweier druckmittelbetätigter Organe, vorzugsweise Hydraulikzylinder (6a), die miteinander in Kommunikation stehen und zwischen den Kettenlaufwerkkörpern (3) und dem Mittelrahmen (R) verbunden sind, bewirkt, wobei die Hydraulikzylinder (6a), die die Rollbewegung der Kettenlaufwerkkörper (3) steuern, auf gegenüberliegenden Seiten des Unterwagens mit ihren ersten Enden mit den ersten Kupplungselementen (5a) der Kupplungsanordnung (5) und mit ihren zweiten Enden mit zweiten Kupplungselementen (5b) der Kupplungsanordnung (5) gekuppelt sind und wobei die Kupplungsanordnung (5) eine Drosseleinrichtung (7) umfasst, die eine gegenseitige Drehbewegung (w) der Kupplungselemente (5a, 5b) begrenzt, um die vertikale Rollbewegung der Kettenlaufwerkkörper (3) durch mechanische Begrenzer zu steuern, die in Verbindung mit den Kupplungselementen (5a, 5b) angeordnet sind, wobei die Begrenzer mit Aussparungen und Vorsprüngen (7a, 7b) zwischen den Kupplungselementen (5a, 5b) an deren äußeren Enden gegenüber dem Ende der Kupplungsanordnung (5) mit dem Drehgelenk (N) angeordnet sind.

2. Anordnung nach Anspruch 1, **dadurch gekennzeichnet, dass** in Verbindung mit der Kupplungsanordnung eine Verriegelungsanordnung (8) zum gegeneinander unbeweglichen Verriegeln der Kupplungselemente (5a, 5b) durch mechanisch, elektrisch und/oder druckmittelbetriebene Stellglieder angeordnet ist.

3. Anordnung nach Anspruch 1, **dadurch gekennzeichnet, dass** die Verriegelungsanordnung (8) mechanisch anhand einer Verriegelungsbuchse (8b) angeordnet ist, die durch Löcher (8a) in den Kupplungselementen (5a, 5b) zu führen ist.

4. Anordnung nach einem der vorstehenden Ansprüche 1-3, **dadurch gekennzeichnet, dass** sie zum Ausbalancieren der Einstellanordnung (6), die die Ablenkungsbewegungen der Kettenlaufwerkkörper (3) auf gegenüberliegenden Seiten steuert, separate Druckakkumulatoren (6b) in Hydraulikkreisen der gegenüberliegenden Kettenlaufwerkkörper aufweist.

5. Anordnung nach Anspruch 1 und 4, **dadurch gekennzeichnet, dass** das Volumen der über getrennte Hydraulikkreise zu betreibenden Druckakkumulatoren (6b) der Kettenlaufwerkkörper (3) so bemessen ist, dass die Akkumulatoren das gesamte Druckmittelvolumen der Hydraulikzylinder (6a) abdecken, wobei bei Überschreiten eines Vorfüllrucks der Druckakkumulatoren bei belastetem Unterwagen das Druckmittel in die Druckakkumulatoren (6b) fließt und die Hydraulikzylinder (6a) zusammengedrückt werden, bis die mechanischen Begrenzer (7; 7a, 7b) die Ablenkungsbewegung des Unterwagens stoppen.

6. Anordnung nach einem der vorstehenden Ansprüche 1-5, **dadurch gekennzeichnet, dass** die Drehgelenke (N) zwischen den Kettenlaufwerkkörpern (3) und dem Mittelrahmen (R) zur Optimierung ihrer Funktion so angeordnet sind, dass der Unterwagen mit einer Gelenkachse (A) versteift wird, die den Mittelrahmen (R) und die Kettenlaufwerkkörper (3) miteinander verbindet und die in Querrichtung ununterbrochen durch den Unterwagen verläuft.

7. Anordnung nach einem der vorstehenden Ansprüche 1-6, **dadurch gekennzeichnet, dass** die Hydraulikzylinder (6a), die die Rollbewegung der Kettenlaufwerkkörper (3) steuern, in einer vertikalen Position an der Seite der Kupplungsanordnung (5) auf der Seite der Kettenlaufwerkkörper (3) angeordnet sind.

8. Anordnung nach einem der vorstehenden Ansprüche 1-7, **dadurch gekennzeichnet, dass** die Hydraulik-zylinder (6a), die die Rollbewegung der Kettenlaufwerkkörper (3) steuern, in einer vertikalen Position an einem gegenüberliegenden Ende der Kupplungsanordnung (5) in Bezug auf das Drehgelenk (N) angeordnet sind.

## Revendications

1. Agencement pour contrôler les mouvements de déviation d'un train de roulement entraîné à chenilles, dans lequel un train de roulement (2), destiné à un engin de chantier (1) spécialement applicable à un usage hors route, comprend sur ses côtés des corps de chenille rigides (3) dans le sens longitudinal (s) du train de roulement, dans lesquels les extrémités des corps de chenille sont pourvues de roues intermédiaires et dentées (4) pour l'utilisation de la chenille (T), où les corps de chenille (3) sont couplés à un cadre central (R) du train de roulement en rotation dans un plan vertical dans le sens longitudinal (s) du train de roulement par des articulations rotatives (N) entre le cadre central et les corps de chenille, **caractérisé par le fait que**, aux points d'articulation connectant le cadre central (R) du train de roulement et les corps de chenille (3) est agencé un dispositif de couplage (5) pour le réglage de la tension, qui comprend des premières pièces d'accouplement (5a) fixées de manière stationnaire au cadre central (R) et des secondes pièces d'accouplement (5b) fixées de façon stationnaire aux corps de chenille (3), les pièces d'accouplement (5a, 5b) se composant essentiellement de plaques allongées qui tournent l'une contre l'autre dans un plan essentiellement vertical afin de permettre un mouvement mutuel de rotation des corps de chenille (3) et du cadre central (R), dans lequel l'agencement dans le train de roulement comprend un dispositif de réglage (6) actionné par un agent de pression, de préférence hydraulique, par lequel un mouvement dans le sens de la hauteur (h) du corps de chenille sur un côté cause un mouvement de magnitude correspondante de l'autre corps de chenille dans le sens contraire au moyen de deux organes actionnés par un agent de pression, de préférence des vérins hydrauliques (6a), communiquant entre eux et connectés entre les corps de chenille (3) et le cadre central (R), où les vérin hydrauliques (6a) qui commandent le mouvement de roulement des corps de chenille (3) sont accouplés sur les côtés opposés du train de roulement par ses premières extrémités aux premières pièces d'accouplement (5a) du dispositif de couplage (5) et par ses secondes extrémités aux secondes pièces d'accouplement (5b) du dispositif de couplage (5), et ou le dispositif de couplage (5) comprend un dispositif de restriction (7) qui restreint les mouvements rotatifs mutuels (w) des pièces d'accouplement (5a, 5b) afin de contrôler le mouvement de roulement des corps de chenille (3) dans le plan vertical par des limiteurs mécaniques disposés en connexion avec les pièces d'accouplement (5a, 5b), les limiteurs étant agencés avec des dispositifs à retraits et saillies (7a, 7b) entre les pièces d'accouplement (5a, 5b) à leurs extrémités extérieures à l'opposé des extrémité du dispositif de couplage (5) équipé de l'articulation rotative (N).

2. Agencement décrit dans la revendication 1, **caractérisé par le fait qu'**un dispositif de verrouillage (8) est agencé en connexion avec le dispositif de couplage pour verrouiller les pièces d'accouplement (5a, 5b) déplaçables l'une par rapport à l'autre par des actionneurs mécaniques, électriques et/ou activés par un agent de pression.

3. Agencement décrit dans la revendication 1, **caractérisé par le fait que** le dispositif de verrouillage (8) est agencé de façon mécanique par un manchon de verrouillage (8b) à coupler aux trous (8a) dans les pièces d'accouplement (5a, 5b).

4. Agencement décrit dans une quelconque des revendications précédentes 1-3, **caractérisé par le fait que**, pour équilibrer le dispositif de réglage (6) contrôlant les mouvements de déviation des corps de chenille (3) sur les côtés opposés, il comprend des accumulateurs de pression (6b) dans les circuits hydrauliques des corps de chenille opposés.

5. Agencement décrit dans les revendications 1 et 4, **caractérisé par le fait que** le volume des accumulateurs de pression (6b) des corps de chenille (3) à actionner par circuits hydrauliques séparés est mesuré de sorte que les accumulateurs couvrent la totalité du volume de l'agent de pression des vérins hydrauliques (6a), où, lorsqu'une pression de précharge des accumulateurs de pression est dépassée tandis que le train de roulement est sous charge, l'agent de pression s'écoule dans les accumulateurs de pression (6b), où les vérins hydrauliques (6a) raccourcissent jusqu'à ce que les limiteurs mécaniques (7; 7a, 7b) arrêtent le mouvement de déviation du train de roulement.

6. Agencement décrit dans une quelconque des revendications précédentes 1 à 5, **caractérisé par le fait que**, pour pouvoir optimiser son fonctionnement, les articulations rotatives (N) entre les corps de chenille (3) et le cadre central (R) sont disposées pour rigidifier le train de roulement avec un système articulé (A) qui raccorde entre eux le cadre central (R) et les corps de chenille (3) et qui passent en direction transversale et sans interruption à travers le train de roulement.

7. Agencement décrit dans une quelconque des revendications précédentes 1 à 6, **caractérisé par le fait que** les vérins hydrauliques (6a) contrôlant le mouvement de roulement des corps de chenille (3) sont placés en position verticale sur le côté du dispositif de couplage (5) du côté des corps de chenille (3).

8. Agencement décrit dans une quelconque des revendications précédentes 1 à 7, **caractérisé par le fait que** les vérins hydrauliques (6a) contrôlant le mouvement de roulement des corps de chenille (3) sont placés en position verticale à une extrémité opposée du dispositif de couplage (5) par rapport à l'articulation rotative (N).
